# FASCICULE DE BREVET EUROPEEN

(11) **EP 1 839 778 B1**
(45) Date de publication et mention de la délivrance du brevet: **28.07.2010**
(21) Numéro de dépôt: 07300868.2
(22) Date de dépôt: 16.03.2007
(51) Int. Cl.: B22D 17/32, B29C 45/80

(54) **Système de détection de la fermeture d'un moule et appareil de remplissage de moules comportant un tel dispositif**
System zur Erfassung des Schließens einer Form und Gerät zum Befüllen von Formen, das eine solche Vorrichtung umfasst
System for detecting when a mould is closed and device for filling moulds comprising such a device

(30) Priorité: 31.03.2006 FR 0651151
(43) Date de publication de la demande: 03.10.2007
(73) Titulaire: Peugeot Citroën Automobiles SA, 78943 Vélizy-Villacoublay Cedex (FR)
(72) Inventeur: Pia, Bruno, 08000 Villers Semeuse (FR)
(74) Mandataire: Ménès, Catherine

(56) Documents cités:
- JP-A- 10 118 754

## Description

L'invention concerne un système de détection de l'état de fermeture d'un moule comprenant deux empreintes mutuellement déplaçables entre une position relative d'ouverture et une position de fermeture.

Il est connu qu'un moule doit être fermé avant son remplissage. Le joint de moulage doit être étanche, c'est-à-dire qu'il doit y avoir contact au joint de moulage ou un jeu tel qu'il n'y ait pas de fuite de produit injecté ou coulé dans le moule. A cause de divers facteurs polluants notamment liés aux sables et aux résidus de produit de moulage, et de divers facteurs déformants notamment liés à l'usure et aux écarts de dilatation, les moules ne sont plus complètement étanches au niveau du joint de moulage après un certain temps de fonctionnement. Ceci occasionne un risque de fuites du produit injecté ou coulé dans le moule et de noyage de l'installation nécessitant un arrêt de fabrication.

Il est donc impératif que le jeu que les deux empreintes pourraient présenter à l'état fermé du moule soit inférieur à une valeur à laquelle il y a un risque de fuites.

Il est connu du document JP-10118754 A un appareil permettant de déterminer l'état d'un moule formé par deux empreintes. De l'air comprimé est injecté par une conduite formée dans une des empreintes et débouchant en regard de l'autre empreinte, de sorte que si le moule n'est pas complètement fermé, une fuite d'air va se produire et un débit non nul est observé dans la conduite.

Or, les dispositifs de détection de la fermeture des moules connus n'ont pas la précision nécessaire pour répondre aux exigences sur la fermeture du moule ; soit les plages de détection sont trop importantes, soit la détection a lieu sur des éléments trop éloignés du joint de moulage et soumis à des pollutions.

Le but de la présente invention est de remédier à ces inconvénients.

Ce but est atteint avec un système de détection de l'état de fermeture d'un moule comprenant deux empreintes, mutuellement déplaçables entre une position relative d'ouverture et une position de fermeture, du fait qu'il comprend un étalon de référence d'un jeu tolérable que pourrait présenter le moule entre les deux empreintes, et un dispositif de comparaison du jeu du moule et d'un jeu de référence de l'étalon.

Avantageusement, le dispositif de comparaison comprend un moyen d'envoi de fluide au moule ainsi qu'à l'étalon et des moyens de comparaison des fuites de fluide dues au jeu entre les deux empreintes, à l'état fermé et des fuites de référence d'un dispositif de fuite relié au jeu de référence constitué par l'étalon.

De préférence, les moyens de comparaison comportent une membrane souple située dans une enceinte séparée en deux chambres, par la membrane souple, la première chambre étant reliée, par un conduit, au moyen d'envoi de fluide et au moule, la deuxième chambre étant reliée, par un conduit, au moyen d'envoi de fluide et à l'étalon de façon que la position de la membrane souple soit fonction du rapport des jeux.

Selon une autre caractéristique de l'invention, les moyens de comparaison comportent un système de détection de la position de la membrane souple.

De préférence, le système de détection est un système de détection optique.

Avantageusement, l'étalon comprend au moins deux parties, dont l'une est mobile par rapport à l'autre, et en ce que le jeu de référence de l'étalon est modifiable.

L'invention concerne également un appareil de moulage comprenant un système de détection du type précité, et comportant un module de commande du remplissage du moule relié avec le système de détection, le module de commande du remplissage étant conçu pour interdire le remplissage sans ordre d'autorisation du système de détection.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue schématique d'un système de détection de la fermeture d'un moule selon l'invention;
- la figure 2 est un schéma bloc d'un appareil de moulage comprenant le système de détection schématisé à la figure 1.

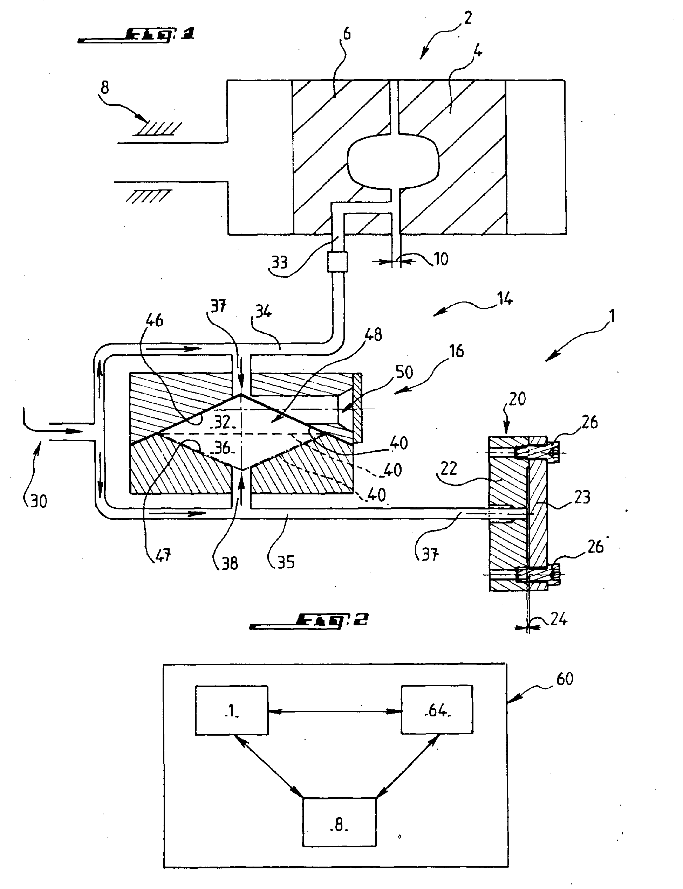

La figure 1 représente un système de détection 1 de l'état de fermeture d'un moule 2 comprenant deux empreintes 4,6, l'un des empreintes 6 étant déplaçable par rapport à l'autre par un système d'ouverture et de fermeture 8 du moule 2.

La figure 1 montre le moule 2 à l'état de fermeture. Il est à noter que le moule 2, à cet état, n'est plus complètement étanche au niveau du joint de moulage, en raison de l'usure par exemple, après un certain temps de fonctionnement et présente un jeu 10 entre les deux empreintes 4,6, c'est-à-dire au niveau du joint de moulage. Ce jeu 10 ne doit pas donner lieu à des fuites de produit injecté dans le moule 2. Le système de détection 1 de l'état de fermeture doit être en mesure d'interdire l'injection s'il y a un risque de fuite en raison du jeu 10.

Le système de détection 1 comprend un dispositif de comparaison 14 du jeu 10 du moule 2 et d'un jeu de référence 24 établis par un l'étalon 20. Autrement dit, tant que le jeu 10 du moule 2 reste inférieur au jeu de référence 24, l'injection de produit dans le moule 2 peut avoir lieu.

Le dispositif de comparaison 14 comprend un moyen d'envoi de fluide 30, tel que de l'air, au moule 2 ainsi qu'à l'étalon 20 respectivement par l'intermédiaire de conduits 34,35.

Le conduit 34 étant relié au moule présentant le jeu 10 entre les deux empreintes 4,6, il se produit alors, au niveau du jeu 10, des fuites de fluide qui dépendent de l'importance du jeu 10.

L'étalon 20 est conçu pour qu'il s'y produise également des fuites de fluide prédéterminées et prédéfinies par le jeu de référence 24. Ces fuites de fluide servent alors de référence pour apprécier si le jeu 10 du moule 2 est encore tolérable.

Pour définir les fuites de référence, l'étalon 20 dans l'exemple représenté, comporte deux parties 22,23, tels que des parois, l'une étant mobile par rapport à l'autre par l'actionnement de vis 26 liant les deux parties 22 et 23 et étant perpendiculaires à celles-ci.

Comme le sont les deux empreintes 4,6, les parties 22 et 23 présentent entre elles, à l'état rapproché, un certain écart définissant le jeu de référence 24. Ainsi, le jeu de référence 24 est modifiable grâce à l'actionnement des vis et ajustable en fonction des spécifications du produit fini et des caractéristiques du produit de remplissage.

Etant donné que les pressions du fluide dans les conduits 34,35 varient en fonction des fuites de fluide, le dispositif de comparaison 14 comprend des moyens de comparaison 16 des fuites dues au jeu 10 entre les empreintes et des fuites de référence correspondant au jeu de référence 24 établi par l'étalon par comparaison de la pression du fluide dans le conduit 34 menant au jeu 10 du moule 2 à la pression du fluide dans le conduit 35 menant au jeu de référence 24 de l'étalon 20.

Les moyens de comparaison 16 comprennent à cette fin une membrane souple 40, par exemple en film plastique standard, située dans une enceinte 48 séparée en deux chambres 32,36 par la membrane souple 40, la première chambre 32 étant relié au conduit 34, la deuxième chambre 36 étant reliée au conduit 35.

La position de la membrane souple 40 est ainsi fonction du rapport des pressions dans les conduits 34 et 35 et donc des jeux 10,24.

Comme on le voit clairement sur la figure 1, l'enceinte 48 présente une section transversale en forme d'un losange entre deux angles opposés duquel s'étend la membrane souple 40, si bien que chacune des chambres 32 et 36 est délimitée par cette membrane souple 40 et par une paroi de fond 46,47 de forme concave.

On constate qu'au niveau de la pointe de la partie concave, la chambre 32 communique avec le conduit 34, et la chambre 36 avec le conduit 35.

Dans le cas ici représenté, la membrane souple 40 occupe une position neutre de référence lorsqu'il y égalité des pressions dans les conduits 34,35 et donc du jeu 10 du moule 2 et du jeu de référence 24, la position de référence, horizontale sur les figures, représentant la limite de tolérance du jeu 10. Par rapport à cette position de référence, le déplacement de la membrane souple 40 vers la paroi de fond 46 de la chambre 32 reliée avec le conduit 34, tel que représentée sur la figure 1, indique que le jeu 10 du moule 2 est supérieur au jeu de référence et donc intolérable.

Pour détecter la position de la membrane souple 40, les moyens de comparaison 16 comportent un système de détection 50, avantageusement optique, pouvant par exemple utiliser une cellule reflex à détection directe avec élimination de l'arrière plan et pouvant réaliser la détection au travers d'une plaque transparente.

Il est à noter que le débit d'envoi de fluide est calibré et ajusté en fonction du jeu de référence 24, des sections et des longueurs des conduits 34,35 aboutissant aux chambres 32,36, et de la résistance de la membrane souple 40. De plus, des tronçons de conduit 37,38 allant des conduits 34,35 vers les chambres 32,36 sont avantageusement les plus courts possibles.

La figure 2 schématise un appareil de moulage 60 comprenant un système de détection 1 selon l'invention par exemple tel que représenté à la figure 1. Cet appareil 60 comporte un module 64 de commande et d'interdiction du remplissage du moule 2 en fonction des résultat du système de détection de l'état de la fermeture du moule 2 avec lequel il est connecté, par l'intermédiaire du dispositif 8 d'ouverture et de fermeture du moule 2, comme cela est représenté par la ligne fléchée.

L'appareil de moulage 60 est conçu avec un ordre de base d'interdiction du remplissage. Le remplissage n'a lieu que lorsque l'ordre d'interdiction est annulé dans le cas où le système de détection ldétecte un jeu 10entre les deux empreintes 4,6 inférieur au jeu de référence 24 de l'étalon 20.

L'appareil de moulage selon l'invention offre une gestion fine de l'autorisation de coulée grâce à une mise en sécurité de l'appareil lorsque les conditions nécessaires de fermeture ne sont pas remplies. L'appareil permet ainsi de limiter la proportion de rebuts et de limiter le nombre d'interruptions de la chaîne de fabrication pour maintenance de l'appareil.

L'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Système de détection (1) de l'état de fermeture d'un moule (2) comprenant deux empreintes (4,6) mutuellement déplaçables entre une position relative d'ouverture et une position de fermeture, **caractérisé en ce qu'**il comprend un étalon (20) de référence d'un jeu (10) tolérable que pourrait présenter le moule (2) entre les deux empreintes (4,6) et un dispositif de comparaison (14) du jeu (10) du moule (2) et d'un jeu de référence (24) de l'étalon (20).

2. Système de détection (1) selon la revendication 1, **caractérisé en ce que** le dispositif de comparaison (14) comprend un moyen d'envoi de fluide (30) au moule (2) ainsi qu'à l'étalon (20) et des moyens de comparaison (16) des fuites de fluide dues au jeu (10) entre les deux empreintes (4,6) à l'état fermé et des fuites de référence d'un dispositif de fuite (37) relié au jeu de référence (24) constitué par l'étalon (20).

3. Système de détection (1) selon la revendication 2, **caractérisé en ce que** les moyens de comparaison (16) comportent une membrane souple (40) située dans une enceinte (48) séparée en deux chambres (32,36) par la membrane souple (40), la première chambre (32) étant reliée, par un conduit (34), au moyen d'envoi de fluide (30) et au moule (2), la deuxième chambre (36) étant reliée, par un conduit (35), au moyen d'envoi de fluide (30) et à l'étalon (20) de façon que la position de la membrane souple (40) soit fonction du rapport des jeux (10,24).

4. Système de détection (1) selon l'une des revendications 2 ou 3, **caractérisé en ce que** les moyens de comparaison (16) comportent un système de détection (50) de la position de la membrane souple (40).

5. Système de détection (1) selon la revendication 4, **caractérisé en ce que** le système de détection (50) est un système de détection optique.

6. Système de détection (1) selon l'une des revendications 2 à 5, **caractérisé en ce que** l'étalon (20) comprend au moins deux parties (22,23) dont l'une est mobile par rapport à l'autre, et **en ce que** le jeu de référence (24) de l'étalon (20) est modifiable.

7. Appareil de moulage (60) comprenant un système de détection (1) selon l'une des revendications précédentes, **caractérisé en ce qu'**il comporte un module de commande du remplissage (64) du moule (2) relié avec le système de détection (1), le module de commande du remplissage (64) étant conçu pour interdire le remplissage sans ordre d'autorisation du système de détection (1).

## Claims

1. Detection system (1) of the state of closure of a mould (2) comprising two impressions (4, 6) mutually displaceable between a relative open position and a closed position, **characterized in that** it comprises a reference standard (20) of a tolerable play (10) which the mould (2) could present between the two impressions (4, 6) and a comparison device (14) of the play (10) of the mould (2) and a reference play (24) of the standard (20).

2. Detection system (1) according to Claim 1, **characterized in that** the comparison device (14) comprises a fluid supply means (30) to the mould (2) and also to the standard (20) and comparison means (16) of the leakages of fluid due to the play (10) between the two impressions (4, 6) in the closed state and of the reference leakages of a leakage device (37) connected to the reference play (24) constituted by the standard (20).

3. Detection system (1) according to Claim 2, **characterized in that** the comparison means (16) comprise a flexible membrane (40) situated in an enclosure (48) separated into two chambers (32, 36) by the flexible membrane (40), the first chamber (32) being connected, by a duct (34), to the fluid supply means (30) and to the mould (2), the second chamber (36) being connected, by a duct (35), to the fluid supply means (30) and to the standard (20) such that the position of the flexible membrane (40) is a function of the ratio of the plays (10, 24).

4. Detection system (1) according to one of Claims 2 or 3, **characterized in that** the comparison means (16) comprise a detection system (50) of the position of the flexible membrane (40).

5. Detection system (1) according to Claim 4, **characterized in that** the detection system (50) is an optical detection system.

6. Detection system (1) according to one of Claims 2 to 5, **characterized in that** the standard (20) comprises at least two parts (22, 23), one of which is movable with respect to the other, and **in that** the reference play (24) of the standard (20) is modifiable.

7. Moulding device (60) comprising a detection system (1) according to one of the preceding claims, **characterized in that** it comprises a filling control module (64) of the mould (2) connected with the detection system (1), the filling control module (64) being designed to prevent the filling without an authorisation order of the detection system (1).

## Patentansprüche

1. Erfassungssystem (1) des Schließzustands einer Form (2), die zwei Formhohlräume (4, 6), die gegenseitig zwischen einer relativen Öffnungsposition und einer Schließposition verstellbar sind, aufweist, **dadurch gekennzeichnet, dass** es ein Bezugsnormalmaß (20) eines zulässigen Spiels (10) aufweist, das die Form (2) zwischen den zwei Formhohlräumen (4, 6) aufweisen könnte, und eine Vorrichtung (14) zum Vergleichen des Spiels (10) der Form (2) mit einem Bezugsspiel (24) des Normalmaßes (20).

2. Erfassungssystem (1) nach Anspruch 1, **dadurch gekennzeichnet, dass** die Vergleichsvorrichtung (14) ein Mittel zum Senden von Fluid (30) zu der Form (2) sowie zu dem Normalmaß (20) sowie Mittel zum Vergleichen (16) der Fluidlecks, die auf das Spiel (10) zwischen den zwei Formhohlräumen (4, 6) im geschlossenen Zustand zurückzuführen sind, aufweist, sowie Bezugslecks einer Leckvorrichtung (37), die mit dem Bezugsspiel (24), das von dem Normalmaß (20) gebildet wird, verbunden ist.

3. Erfassungssystem (1) nach Anspruch 2, **dadurch gekennzeichnet, dass** die Vergleichsmittel (16) eine biegsame Membran (40) aufweisen, die sich in einem Einschluss (48) befindet, der in zwei Kammern (32, 36) durch die biegsame Membran (40) getrennt ist, wobei die erste Kammer (32) von einer Leitung (34) mit dem Mittel zum Senden von Fluid (30) und der Form (2) verbunden ist, wobei die zweite Kammer (36) durch eine Leitung (35) mit dem Mittel zum Senden von Fluid (30) und dem Normalmaß (20) derart verbunden ist, dass die Position der biegsamen Membran (40) von dem Verhältnis der Spiele (10, 24) abhängt.

4. Erfassungssystem (1) nach einem der Ansprüche 2 oder 3, **dadurch gekennzeichnet, dass** die Vergleichsmittel (16) ein Erfassungssystem (50) für die Position der biegsamen Membran (40) aufweisen.

5. Erfassungssystem (1) nach Anspruch 4, **dadurch gekennzeichnet, dass** das Erfassungssystem (50) ein optisches Erfassungssystem ist.

6. Erfassungssystem (1) nach einem der Ansprüche 2 bis 5, **dadurch gekennzeichnet, dass** das Normalmaß (20) mindestens zwei Teile (22, 23) aufweist, von welchen einer zum anderen beweglich ist, und dass das Bezugsspiel (24) des Normalmaßes (20) veränderlich ist.

7. Formgerät (60), das ein Erfassungssystem (1) nach einem der vorhergehenden Ansprüche aufweist, **dadurch gekennzeichnet, dass** es ein Modul zum Steuern des Füllens (64) der Form (2) aufweist, das mit dem Erfassungssystem (1) verbunden ist, wobei das Modul zum Steuern des Füllens (64) konzipiert ist, um das Füllen ohne Genehmigungsbefehl des Erfassungssystems (1) zu untersagen.
